# EUROPEAN PATENT APPLICATION

(11) **EP 2 889 526 A1**
(43) Date of publication of application: **01.07.2015**
(21) Application number: 13831806.8
(22) Date of filing: 20.08.2013
(51) Int. Cl.: F16L 59/06, C01B 33/18

(54) **VACUUM HEAT-INSULATING MATERIAL AND METHOD FOR MANUFACTURING VACUUM HEAT-INSULATING MATERIAL**

(30) Priority: 23.08.2012 JP 2012184412
(71) Applicant: Asahi Glass Company, Limited, Tokyo 100-8405 (JP)
(72) Inventor: SHINOHARA, Nobuhiro, Tokyo 100-8405 (JP); HAMADA, Yuya, Tokyo 100-8405 (JP)
(74) Representative: Müller-Boré & Partner Patentanwälte PartG mbB
(86) International application number: PCT/JP2013/072205
(87) International publication number: WO 2014/030651

(57) **Abstract**

A vacuum insulation panel, which has a high degree of freedom in shape, is capable of stably obtaining an excellent insulating property and has a long lifetime, is provided.

A process for manufacturing a vacuum insulation panel (1) includes a step of pressurizing core members (10) under a pressure of at most 1 ×10⁶ Pa to form a molded product (12), the core members containing fumed silica with a binder (A') 10a, which includes fumed silica (A) and a binder applied to surfaces thereof; and a step of decompressing and encapsulating the molded product (12) in an outer sheath having an airtight property. A vacuum insulation panel includes an outer sheath (14) having an airtight property; a molded product (12) having core members (10), the core members containing fumed silica with a binder (A'), which includes fumed silica (A) and a binder applied to surfaces thereof; and the molded product (12) being decompressed and encapsulated in the outer sheath (14).

## Description

### TECHNICAL FIELD

The present invention relates to a process for manufacturing a vacuum insulation panel and a vacuum insulation panel.

### BACKGROUND ART

A lot of energy-saving measures have been actively promoted for the purpose of a reduction in the load to the global environment for prevention of global warming and so on. For example, thermal insulation panels have been widely employed for the purpose of providing a house, a building and so on with high thermal insulation, providing an automobile door or roof with thermal shield, and employing thermal insulation to reduce the energy required for heating and cooling.

As such thermal insulation panels, foamed products, such as urethane foams, have been known. In order to obtain a sufficient thermal insulating property by such foamed products, it is, however, necessary to make the thickness of the foamed products relatively greater. For this reason, when a space for filling a thermal insulation panel is limited, it is impossible to provide a sufficient thermal insulating property.

On the other hand, as the thermal insulation panels, vacuum insulation panels wherein a powder material, such as perlite or silica, or a fiber material, such as glass fiber, is decompressed and encapsulated in an outer sheath have been known (see Patent Documents 1 to 6).

In the vacuum insulation panels employing a powder material, the powder material is, however, likely to scatter during decompression and encapsulation. When a high pressure is applied to the powder material for molding, followed by carrying out the decompression and encapsulation operation, in order to prevent the powder material from scattering, it is difficult to obtain a vacuum insulation panel having an excellent thermal insulating property.

The vacuum insulation panels employing a fiber material require to have the fiber material decompressed and encapsulated under high vacuum (at most 10 Pa) in order to obtain a sufficient thermal insulating property in comparison with a case where a powder material is employed. For this reason, the vacuum insulating panels employing a fiber material has a problem in that when the degree of vacuum in the vacuum insulation panels is reduced by deterioration with time, the thermal insulating property abruptly lowers to make the lifetime short. On the other hand, the vacuum insulation panels employing a fiber material are allowed to be manufactured only as a plate-like insulating panels, which means that such vacuum insulation panels have a low degree of freedom in shape.

### PRIOR ART DOCUMENTS

### PATENT DOCUMENTS

Patent Document 1: JP-A-8-28776
Patent Document 2: JP-A-2002-310383
Patent Document 3: JP-A-2003-74786
Patent Document 4: JP Patent No. 3482399
Patent Document 5: JP Patent No. 3558980
Patent Document 3: JP-A-2008-215492

### DISCLOSURE OF INVENTION

### TECHNICAL PROBLEM

The present invention proposes a process for manufacturing a vacuum insulation panel having a high degree of freedom in shape, being capable of having an excellent insulating property in a stable manner and having a long lifetime. The present invention also proposes a vacuum insulation panel having a high degree of freedom in shape, having an excellent insulating property in a stable manner and having a long lifetime.

### SOLUTION TO PROBLEM

The present invention provides a process for manufacturing a vacuum insulation panel, which includes the following steps (I) and (II):
(I) a step of pressurizing core members under a pressure of at most 1 ×10⁶ Pa to form a molded product, the core members containing fumed silica with a binder (A'), which includes particles of fumed silica (A) and a binder applied to surfaces thereof; and
(II) a step of decompressing and encapsulating the molded product in an outer sheath having an airtight property.

In the process for manufacturing a vacuum insulation panel according to the present invention, the molded product may be formed by pressurizing the core members with the core members being accommodated in an inner sheath having an air permeability in step (I), and the molded product may be decompressed and encapsulated in the outer sheath, being accommodated in the inner sheath, in step (II).

It is preferred that the core members contain porous silica (B).

It is preferred that the mass ratio A/B of the fumed silica (A) to the porous silica (B) be 20/80 to 90/10.

The core members may contain at least one additive (C) selected from the group consisting of graphite, carbon black, a titanium oxide and potassium titanate.

It is preferred that the binder be an inorganic binder.

The present invention provides a vacuum insulation panel, which includes an outer sheath having an airtight property; and a molded product having core members, the core members containing fumed silica with a binder (A'), which includes particles of fumed silica (A) and a binder applied to surfaces thereof; the molded product being decompressed and encapsulated in the outer sheath.

It is preferred that the vacuum insulation panel according to the present invention further include an inner sheath having an air permeability, and that the molded product be decompressed and encapsulated in the outer sheath, being accommodated in the inner sheath.

### ADVANTAGEOUS EFFECTS OF INVENTION

In accordance with the process for manufacturing a vacuum insulation panel according to the present invention, it is possible to manufacture a vacuum insulation panel, which has a high degree of freedom in shape, is capable of obtaining an excellent insulating property in a stable manner and has a long lifetime.

The vacuum insulation panel according to the present invention has a high degree of freedom in shape, has an excellent insulating property in a stable manner and has a long lifetime.

### BRIEF DESCRIPTION OF DRAWINGS

Fig. 1 is a cross-sectional view of a molded product obtained by one of the steps of a process for manufacturing a vacuum insulation panel according to the present invention;
Fig. 2 is a cross-sectional view showing one example of the vacuum insulation panel according to the present invention;
Fig. 3 is an enlarged cross-sectional view of a molded product in a vacuum insulation panel according to the present invention;
Fig. 4 is an enlarged cross-sectional view of another molded product in a vacuum insulation panel according to the present invention;
Fig. 5 is a cross-sectional view of a molded product obtained by a process for manufacturing a vacuum insulation panel according to the present invention; and
Fig. 6 is a cross-sectional view showing another example of the vacuum insulation panel according to the present invention.

### DESCRIPTION OF EMBODIMENTS

### <Process for manufacturing vacuum insulation panel>

The process for manufacturing a vacuum insulation panel according to the present invention is classified into the following two kinds of processes (α) and (β), depending on the presence and absence of an inner sheath:
(α) Process for pressurizing core members as they are to form a molded product, and decompressing and encapsulating, in an outer sheath, the molded product as it is.
(β) Process for forming a molded product by pressurizing core members with the core members being accommodated in an inner sheath, and decompressing and encapsulating the molded product in an outer sheath with the molded product being accommodated in the inner sheath.

### [Process (α)]

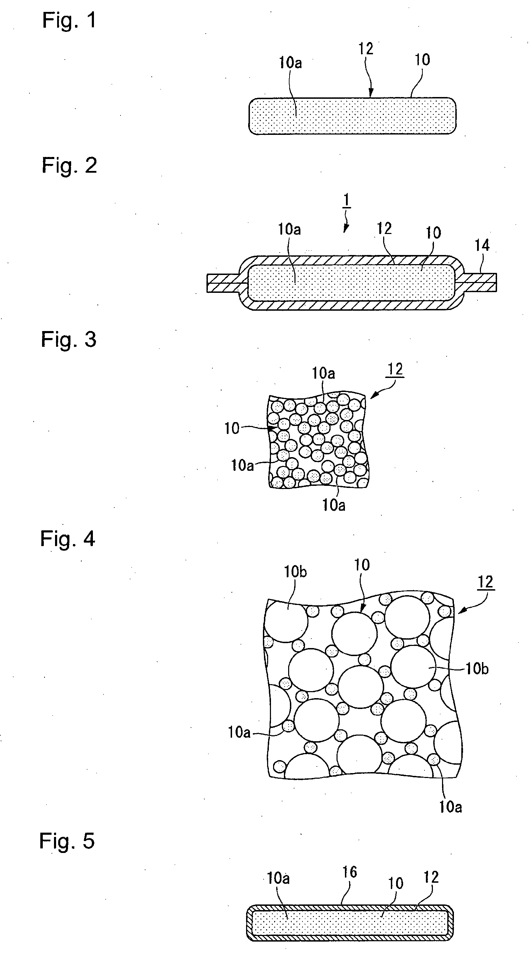

In process (α), no inner sheath is employed. Process (α) includes the following step (I-1) and step (II-1) in this order:
(I-1) Step of pressurizing core members 10 under a pressure of at most 1 × 10⁶ Pa as they are to form a molded product 12, the core members containing fumed silica with a binder (A') 10a, which includes fumed silica and a binder applied to surfaces thereof, as shown in Fig. 1; and
(II-1) Step of obtaining a vacuum insulation product 1 by decompressing and encapsulating, in an outer sheath 14, the molded product 12 as it is as shown in Fig. 2. (Step (I-1))

The core members 10 include the fumed silica with a binder (A') 10a, which includes fumed silica (A) and a binder applied to surfaces thereof.

The core members 10 may be made of only the fumed silica with a binder (A') 10a as shown in Fig. 3 or be made of a mixture of the fumed silica with a binder (A') 10a and porous silica (B) 10b as shown in Fig. 4. It is preferred from the point of view of obtaining a more excellent insulating property that the core members 10 include the fumed silica with a binder (A') 10a and the porous silica (B) 10b.

The fumed silica (A) employed in the fumed silica with a binder (A') 10a is made of fine silica particles as primary particles, which are amorphous and spherical and are free of micropores. The fumed silica (A) may be, for example, by a process for evaporating silicon tetrachloride and carrying out evaporated gas phase reaction in an oxyhydrogen flame having a high temperature.

Because the fumed silica (A) is extremely fine powder, its specific surface area is normally employed as the index representing the size of the particles.

The fumed silica (A) has a specific surface area of preferably 50 to 400 m²/g, more preferably 100 to 350 m²/g and particularly preferably 200 to 300 m²/g. When the specific surface area of the fumed silica (A) is at least the lower limit, it is easy to obtain an excellent insulating property. When the specific surface area of the fumed silica (A) is at most the upper limit, it is easy to apply a binder to the surfaces of the particles, with the result that it is easy to prevent the fumed silica with a binder (A') from scattering during decompression and encapsulation in step (II-1).

In the present invention, the specific surface area may be measured by a nitrogen adsorption method (BET method).

Specific examples of the fumed silica (A) include products commercially available under the trademarks of AEROSIL 200 (primary average particle size: 12 nm, specific surface area: 200 m²/g, manufactured by NIPPON AEROSIL CO., LTD.) and AEROSIL 300 (primary average particle size: 7 nm, specific surface area: 300 m²/g, manufactured by NIPPON AEROSIL CO., LTD.).

The fumed silica (A) may be made of only one kind of fumed silica or a combination of at least two kinds of fumed silica.

The binder may be an organic binder or an inorganic binder. Among them, the binder is preferably an inorganic binder from the point of view that such an inorganic binder has a low thermal conductivity and is capable of easily obtaining an excellent insulating property.

The inorganic binder may be, for example, preferably made of one kind selected from the group consisting of sodium silicate, aluminum phosphate, magnesium sulfate and magnesium chloride. Among them, sodium silicate is preferred from the point of view that it is capable of easily obtaining an excellent insulating property.

The binder may be made of only one kind of binder material or a combination of at least two kinds of binder materials.

There is no particular limitation to the method for producing the fumed silica with a binder (A') 10a, one example of which is a method for applying a binder liquid to particles of the fumed silica (A). After the binder liquid is applied to the particles of the fumed silica (A), they may be blended by, e.g. a blender.

The method for applying the binder liquid may be carried out by, e.g. spray coating.

The solvent in the binder liquid applied to the particles of the fumed silica (A) may be evaporated before molding. By this treatment, the binder that exists on the particles of the fumed silica with the binder (A') 10a can develop excellent adhesiveness. The solvent may be evaporated by heating.

There is no particular limitation to the solvent used for the binder liquid. Examples of the solvent include water and ethanol.

The ratio of the binder in the binder liquid is preferably 3 to 30 mass%, more preferably 4 to 20 mass%. When the ratio of the binder is within any one of these ranges, it is easy to apply the binder to the fumed silica (A). The binder liquid is particularly preferably water glass that is a sodium silicate aqueous solution.

In the core members, the fumed silica (A) preferably contains porous silica (B) for the reason described later. When the porous silica (B) is contained, the binder liquid is particularly preferably water glass that is a sodium silicate aqueous solution.

The ratio of the binder in the fumed silica with a binder (A') 10a is preferably 1 to 30 mass%, more preferably 2 to 20 mass%, particularly preferably 3 to 15 mass% when the amount of the fumed silica with the binder (A') 10a is presumed to be 100 mass%. The ratio of the binder in the fumed silica with the binder (A') 10a is preferably 1 to 30 mass%, more preferably 2 to 20 mass%, particularly preferably 3 to 15 mass% when the total amount of the fumed silica (A), the porous silica (B) and the binder is presumed to be 100 mass%. When the ratio of the binder is at least the lower limit, it is possible to decrease the density of the fumed silica with the binder (A') in a molded product and to obtain an excellent insulating property because the molded product can be molded under a lower pressure. When the ratio of the binder is at most the upper limit, it is possible to prevent the insulating property from being reduced due to an excessive increase in the amount of the binder.

The fumed silica with the binder (A') 10a may be made of only one kind of material or a combination of at least two kinds of materials.

The porous silica (B) 10b has a specific surface area of preferably 100 to 800 m²/g, more preferably 200 to 750 m²/g, particularly preferably 300 to 700 m²/g. When the specific surface area of the porous silica (B) 10b is at least the lower limit, it is easy to obtain an excellent insulating property. When the specific surface area of the porous silica (B) 10b is at most the upper limit, it is possible to reduce the amount of the binder absorbed in the porous silica (B) 10b with the result that a molded product can be molded under a lower pressure even when the added amount of the binder is small. Thus, the molded product can have a reduced density, being provided with an excellent insulating property.

The porous silica (B) 10b has a porosity of preferably 60 to 90%, more preferably 65 to 85%, particularly preferably 70 to 80%. When the porosity of the porous silica (B) 10b is at least the lower limit, it is easy to obtain an excellent insulating property because it is possible to reduce the thermal conductivity of the solid. When the porosity of the porous silica (B) 10b is at most the upper limit, it is easy to obtain an excellent insulating property because porous silica particles are hardly to be crushed during pressure application with the result that the porous silica particles can maintain porosity.

The porosity may be measured by a nitrogen adsorption method (BET method).

The porous silica (B) 10b has an average particle size of preferably 1 to 20 µm, more preferably 2 to 15 µm, particularly preferably 3 to 10 µm. When the average particle size of the porous silica (B) 10b is at least the lower limit, it is easy not only to provide the porous silica with a high porosity but also to obtain an excellent insulating property. When the average particle size of the porous silica (B) 10b is at most the upper limit, it is easy to obtain an excellent insulating property because a molded product that is obtained by blending the porous silica and the fumed silica with a binder (A') 10a can be prevented from having an excessively high density.

The average particle size may be measured by, e.g. a laser diffraction scattering method, electron microscopic observation.

The porous silica (B) 10b may be made of only one kind of material or a combination of at least two kinds of materials.

When the core members 10 contain a component other than the fumed silica with a binder (A') 10a, the content of the fumed silica with a binder (A') 10a in the core members (having 100 mass%) is preferably 16 to 89 mass%, more preferably 24 to 79 mass%, particularly preferably 32 to 69 mass%. When the content is within any one of these ranges, it is possible to obtain an excellent insulating property.

When the core members 10 are made of a mixture of the fumed silica with a binder (A') 10a and the porous silica (B) 10b, the mass ratio of the fumed silica with a binder (A') 10a to the porous silica (B) 10b is preferably 20/80 to 90/10, more preferably 30/70 to 80/20, particularly preferably 40/60 to 70/30, on the basis of the mass ratio A/B of the fumed silica (A) to the porous silica (B) 10b before application of the binder. When the mass ratio A/B is within any one of these ranges, the binder can be helpful to prevent handling performance from being reduced in order to obtain a molded product having a low density and to provide a molded product with an excellent insulating property even when the molded product is molded under a low pressure.

The core members 10 may contain at least one additive (C) selected from the group consisting of graphite, carbon black, a titanium oxide and potassium titanate. Thus, it is possible to obtain a vacuum insulation panel having a more excellent insulating property.

When the core members 10 contain an additive (C), the total content of the fumed silica with a binder (A') 10a and the porous silica (B) 10b in the core members 10 (having 100 mass%) is preferably 80 to 99 mass%, more preferably 85 to 98 mass%, particularly preferably 90 to 95 mass%. When the total content is within any one of these ranges, it is possible to obtain an excellent insulating property.

When the core members 10 contain an additive (C), the content of the additive (C) in the core members 10 (having 100 mass%) is preferably 1 to 20 mass%, more preferably 2 to 15 mass%, particularly preferably 5 to 10 mass%. When the content is within any one of these ranges, it is easy to obtain an excellent insulating property.

When the core members 10 contain an additive (C), the mass ratio C/(A'+ B) of the additive (C) to the total content of the fumed silica with a binder (A') 10a and the porous silica (B) 10b in the core members 10 is preferably 0.01 to 0.25, more preferably 0.02 to 0.18, particularly preferably 0.05 to 0.11. When the mass ratio C/(A'+ B) is within any one of these ranges, it is easy to obtain an excellent insulating property.

Examples of the method for blending the fumed silica with a binder (A') 10a along with the porous silica (B) 10b or the additive (C) as required include a method using a V type blender and a method using a blender with a stirrer. Among them, the blending method is preferably a high speed stirring device, such as a blender with a stirrer, in order to carrying out the blending operation with good dispersibility.

Although the porous silica (B) 10b may be blended before the binder is applied to the surfaces of particles of the fumed silica (A), it is preferred that the binder be applied to the surface of the particles of the fumed silica (A) to obtain the fumed silica with a binder (A') 10a, followed by carrying out the blending operation. By this arrangement, the binder cannot be absorbed in the porous silica (B) 10b to control the waste of the binder. It is also possible to prevent the porosity of the porous silica (B) 10b from being reduced.

The blending of the additive (C) may be carried out after the binder is applied to the surfaces of the particles of the fumed silica (A) to obtain the fumed silica with a binder (A') 10a, or before the binder is applied to the surfaces of the particles of the fumed silica (A).

There is no particular limitation to the method for molding the core members 10, one example of which is a method using a mold. A specific example is a method for placing the core members 10 directly in a mold and molding the core members 10 without accommodating the core members in an inner sheath.

The pressure applied for molding the core members 10 is set at at most 1 ×10⁶ Pa. It is possible to provide a molded product 12 with a sufficient strength by application of even a pressure of at most 1 × 10⁶ Pa because the core members 10 are bonded together by the bonding force of the binder existing on the surfaces of the particles of the fumed silica with a binder (A') 10a in step (I-1). Further, by carrying out the molding operation by application of a pressure of at most 1×10⁶ Pa, the core members 10 in a formed molded product 12 are prevented from having an excessively high density. Accordingly, the thermal conduction through the core members 10 is reduced to obtain an excellent insulating property.

The lower limit of the pressure applied when the core members 10 are pressurized and molded is preferably 0.5×10⁵ Pa from the point of view that it is possible to obtain a molded product having a high strength and difficult to collapse in shape and that the core members are hardly to scatter when being decompressed and encapsulated.

It is preferred that after the core members 10 are pressurized and molded to obtain a molded product 12, the molded product 12 be dried. By carrying out the drying operation after molding, the core members 10 are more firmly bonded together by the binder existing on the surfaces of the particles of the fumed silica with a binder (A') 10a. Examples of the method for drying the molded product 12 include a method for carrying out heating by using a dryer having a constant drying temperature and a method for heating by using an electric furnace.

The drying temperature is preferably 80 to 150°C, more preferably 100 to 120°C.

The drying time is preferably 12 to 120 hours, more preferably 24 to 60 hours, although varying on the drying temperature.

In process (α) wherein a molded product is not encapsulated in an inner sheath, the molded product 12 may be heated at a temperature of 200 to 600°C for 1 to 24 hours after molding unlike process(β) wherein an inner sheath is employed. By this operation, it is possible to more reliably reduce the moisture remaining in the pores of the porous silica (B) 10b.

### (Step (II-1))

The molded product 12 obtained by step (I-1) is accommodated into the outer sheath 14 as it is without being accommodated into an inner sheath, and the molded product 12 is decompressed and encapsulated in the outer sheath 14 to obtain a vacuum insulation panel 1 by decompressing the inside of the outer sheath and encapsulating the molded product in the outer sheath.

As the method for decompressing the inside of the outer sheath 14, a method normally employed for manufacturing a vacuum insulation panel may be employed. For example, such a method may be a method wherein a molded product, which is accommodated in an outer sheath 14 with three sides preliminarily sealed, is vacuum-encapsulated by heat-sealing the open one side of the outer sheath 14 after the molded product is decompressed in a vacuum chamber with a heat-seal function until the inside of the vacuum chamber is decompressed to a certain pressure.

The outer sheath 14 has a degree of decompression of preferably at most 1×10³ Pa, more preferably at most 1 ×10² Pa therein from a point of view of obtaining an excellent insulating property and providing the vacuum insulation panel 1 with a longer service life. The degree of decompression in the outer sheath 14 is preferably at least 1 Pa from the point of view of easy decompression in the outer sheath.

It is sufficient the outer sheath 14 has airtightness and can decompress and encapsulate the molded product 12. Examples of the outer sheath 14 include a sheath made of a gas barrier film and another sheath. As the gas barrier film, any known gas barrier film employed in vacuum insulation panels may be employed without limitation.

There are no particular limitation to the size and the shape of the outer sheath 14, which may be properly determined to comply with the size and the shape of a desired vacuum insulation panel 1.

### [Process (β)]

In process (β), an inner sheath is employed. Process (β) includes the following step (I-2) and step (II-2) in this order.

(I-2) Step of pressurizing core members 10 under a pressure of at most 1 ×10⁶ Pa to form a molded product 12 with the molded product being accommodated in an inner sheath 16 having permeability, the core members containing fumed silica with a binder (A') 10a, which includes particles of the fumed silica (A) and a binder applied to surfaces thereof, as shown in Fig. 5;

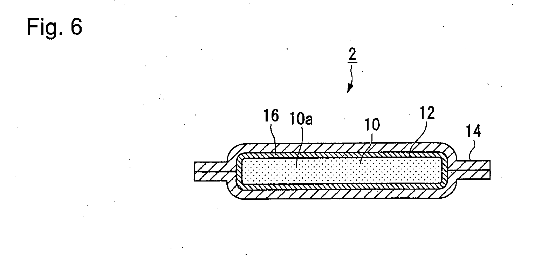

(II-2) Step of obtaining a vacuum insulation product 2 by decompressing and encapsulating the molded product 12 in an outer sheath 14 with the molded product 12 being accommodated in the inner sheath 16. In Figs. 5 and 6, the parts identical or similar to those shown in Figs. 1 and 2 are denoted by the same reference numerals, and explanation of those parts will be omitted.

### (Step (I-2))

Step (I-2) may be carried out in the same way as step (I-1) of process (α) except that the inner sheath 16 is employed, and the preferred embodiments of step (I-2) are common to those of step (I-1) of process (α). When this step is applied to a thin molded product or to mold, e.g. a molded product having a curved shape, this step is advantageous in that it becomes easy to handle such a molded product by accommodating the core members in the inner sheath.

For example, by accommodating in the inner sheath 16 the core members 10 containing the fumed silica with a binder (A') 10a and then placing into a mold the inner sheath 16 with the core members 10 being accommodated therein, the core members 10 can be pressurized, being accommodated in the inner sheath 16, to form the molded product 12.

It is sufficient that the inner sheath 16 has permeability and can prevent the core members forming the molded product 12 from coming out during decompression and encapsulation. Examples of the inner sheath include a sheath made of a paper material and a sheath made of nonwoven fabric.

There are no particularly limitations to the size and the shape of the inner sheath 16. The size and shape may be properly determined so as to comply with the size and the shape of a desired vacuum insulation panel 2.

In process (β) as well, the pressure applied for molding the core members 10 is set at at most 1×10⁶ Pa. It is possible to provide the molded product 12 with a sufficient strength by application of even a pressure of at most 1 ×10⁶ Pa because the core members 10 are bonded together by the bonding force of the binder existing on the surfaces of the particles of the fumed silica with a binder (A') 10a. Further, by carrying out the molding operation by application of a pressure of at most 1 ×10⁶ Pa, the core members 10 in the formed molded product 12 are prevented from having an excessively high density. Accordingly, the thermal conduction through the core members 10 is reduced to obtain an excellent insulating property.

The lower limit of the pressure applied when the core members 10 are pressurized and molded is preferably 0.5×10⁵ Pa from the point of view that it is possible to obtain a molded product having high strength and difficult to collapse in shape and that the core members are hardly to scatter when being decompressed and encapsulated.

### (Step (II-2))

The molded product 12 obtained by step (I-2) with the molded product being accommodated in the inner sheath 16 is placed in the outer sheath 14, and the molded product is decompressed and encapsulated in the outer sheath, being accommodated in the inner sheath 16, to obtain a vacuum insulation panel 2.

As the method for decompressing the inside of the outer sheath 14, a method identical or similar to the method referred to with respect to step (II-1) of process (α) may be employed.

The preferred modes of the degree of decompression in the outer sheath 14 are the same as step (II-1) of process (α).

### (Function and Advantage)

In accordance with the process for manufacturing a vacuum insulation panel according to the present invention, the presence of the bonding force of the binder existing on the surfaces of particles of the fumed silica with a binder (A') can form a molded product having a strength enough to be difficult to collapse in shape and sufficiently control the scattering of the core members during decompression and encapsulation even if the molding operation is carried out by applying a pressure of at most 1 ×10⁶ Pa. Accordingly, the molded product can be encapsulated in the outer sheath, being sufficiently decompressed and maintaining its density in a low level, with a result that the thermal conduction through the core members is further reduced to obtain a vacuum insulation panel exhibiting a more excellent insulating property.

Further, in the process for manufacturing a vacuum insulation panel according to the present invention, by employing both of the fumed silica with a binder (A') and the porous silica (B) as the core members, it is possible to obtain a vacuum insulation panel exhibiting a further excellent insulating property in comparison with a case where the fumed silica with a binder (A') is employed alone. This is because it is supposed that the porosity of the porous silica (B) makes it difficult for the air remaining in the pores to move.

### <Vacuum Insulation Panel>

As the vacuum insulation panel according to the present invention, a vacuum insulation panel having no inner sheath and a vacuum insulation panel having an inner sheath are given.

The vacuum insulation panel having no inner sheath is exemplified by the vacuum insulation panel 1 shown as an example in Fig. 2. The vacuum insulation panel 1 includes the outer sheath 14 having an airtight property, and the molded product 12 having the core members 10 molded to form the molded product, the core members containing the fumed silica with a binder (A'), which includes particles of the fumed silica (A) and a binder applied to surfaces thereof. The vacuum insulation panel 1 is an insulation panel wherein the molded product 12 is decompressed and encapsulated in the outer sheath 14.

As the process for manufacturing the vacuum insulation panel having no inner sheath, the above-mentioned process (α) is preferred.

The core members 10 in the molded product 12 of the vacuum insulation panel 1 may be made of only the fumed silica with a binder (A') 10a as shown in Fig. 3 or may be made of a combination of the fumed silica with a binder (A') 10a and the porous silica (B) 10b as shown in Fig. 4.

The molded product 12 is preferably a molded product prepared by molding the core members 10 containing the fumed silica with a binder (A') 10a and the porous silica (B) 10b from the point of view of obtaining a more excellent insulating property.

The molded product 12 of the vacuum insulation panel 1 is formed such that the core members 10 are bonded together by the binder on particles of the fumed silica with a binder (A') 10a.

When the core members 10 are made of only the fumed silica with a binder (A') 10a as shown in Fig. 3, the particles of the fumed silica with a binder (A') 10a are bonded together by the binder applied to the surfaces of the particles of the fumed silica (A). When the core members 10 are made of a combination of the fumed silica with a binder (A') 10a and the porous silica (B) 10b as shown in Fig. 4, the particles of the fumed silica with a binder (A') 10a and the particles of the porous silica (B) 10b are bonded together by the binder existing on the surfaces of the particles of the fumed silica with a binder (A') 10a.

Even if a binder is applied to particles of the porous silica (B), it is difficult to form the molded product by mutual bonding among the particles of the porous silica (B) only, because the binder is absorbed in the porous silica (B). As shown in Fig. 4, the particles of the porous silica (B) 10b are bonded together because the particles of the fumed silica with a binder (A') 10a are interposed therebetween.

The preferred modes of the fumes silica with a binder (A') 10a and the porous silica (B) 10b are the same as the preferred modes described with respect to the above-mentioned process (α).

The preferred modes of the content of the fumed silica with a binder (A') 10a in the core members 10 and the mass ratio of the fumed silica with a binder (A') 10a to the porous silica (B) 10b are the same as the preferred modes described with reference to the above-mentioned process (α).

The core members 10 in the molded product 12 of the vacuum insulation panel 1 may contain the above-mentioned additive (C).

When the core members 10 contain the additive (C), the preferred modes of the content of the additive (C) and the mass ratio C/(A'+B) of the additive (C) to the total content of the fumed silica with a binder (A') 10a and the porous silica (B) 10b in the core members 10 are the same as the preferred modes described with reference to the above-mentioned process (α).

The molded product 12 has a density of preferably 0.1 to 0.5 g/cm³, more preferably 0.1 to 0.4 g/cm³, further preferably 0.15 to 0.3 g/cm³. When the density of the molded product 12 is at least the lower limit, it is possible to have easy handleability of the molded product, and the core members are hardly to scatter when being decompressed and encapsulated. When the density of the molded product 12 is at most the upper limit, it is easy to stably obtain an excellent insulating property.

The degree of decompression in the outer sheath 14 of the vacuum insulation panel 1 is preferably at most 1×10³ Pa, more preferably at most 1×10² Pa from the point of view of obtaining an excellent insulating property and a long service life of the vacuum insulation panel 1. The degree of decompression in the outer sheath 14 is preferably at least 1 Pa from the point of view of easy decompression operation in the outer sheath.

The vacuum insulation panel having an inner sheath is exemplified by the vacuum insulation panel 2 shown as an example in Fig. 6.

The vacuum insulation panel 2 includes the outer sheath 14 having an airtight property, the molded product 12 having the core members 10 molded to form the molded product, the core members containing the fumed silica with a binder (A'), which includes particles of the fumed silica (A), and a binder applied to the surfaces thereof. The vacuum insulation panel 2 is an insulation panel where the molded product 12 is decompressed and encapsulated in the outer sheath 14, being accommodated in the inner sheath 16.

The vacuum insulation panel 2 is the same as the vacuum insulation panel 1 except that the molded product 12 is vacuum-encapsulated in the outer sheath 14, being accommodated in the inner sheath.

As the process for manufacturing the vacuum insulation panel having an inner sheath, the above-mentioned process (β) is preferred.

### (Function and Advantage)

The vacuum insulation panel according to the present invention has an excellent insulating property in a stable manner and a long service life because of employing the core members containing the fumed silica with a binder (A'). The reason why these advantages are obtained is as follows.

The fumed silica (A) has the property of having a lower thermal conductivity because of having a small number of contact points between the particles when being formed as a molded product, in comparison with the other powder materials. Accordingly, it is possible to obtain an excellent insulating property by utilizing the fumed silica (A) as the core members. In the core members containing the fumed silica with a binder (A'), the binder existing on the surfaces of particles of the fumed silica with a binder (A') exhibits an excellent bonding force. Thus, even when the pressurizing and molding operation is carried out under a pressure of at most 1 × 10⁶ Pa, it is possible not only to provide the molded product with a strength to be hard-to-collapse in shape for easy handling but also to sufficiently control the scattering of the core members during decompression and encapsulation. Thus, the molded product can be encapsulated in the outer sheath, being sufficiently decompressed, and having the density kept at a lower level. Accordingly, it is possible to further reduce the thermal conduction through the core members and to stably obtain a more excellent insulating property.

Further, the vacuum insulation panel according to the present invention can have a further excellent insulating property by employing, as the core members, the fumed silica with a binder (A') in combination with the porous silica (B), in comparison with a case where only the fumed silica with a binder (A') is employed.

While the vacuum insulation panels employing a fiber material, such as glass fiber, require a high vacuum condition of at most 1 Pa in order to obtain a sufficient insulating property, the vacuum insulation panel according to the present invention can obtain a similar insulating property even under a degree of decompression of about 1×10³ Pa. For this reason, when the degree of decompression in the vacuum insulation panel according to the present invention is set at at most 1 Pa equivalent to the degree of decompression in the vacuum insulation panels employing a fiber material, the insulating property is almost unchanged up to 1 ×10³ Pa to provide the vacuum insulation panel with a long lifetime even if the degree of decompression is decreased by deterioration over time.

Further, the vacuum insulation panel according to the present invention has a higher degree of freedom in shape than the vacuum insulation panels employing a fiber material.

### EXAMPLES

Now, the present invention will be described in detail in reference to examples. It should be understood that the present invention is not limited to the examples. Examples 1 to 7 are working examples while Example 8 is a comparative example.

### [Measurement of Thermal Conductivity]

The thermal conductivity of the vacuum insulation panel obtained in each of the examples was measured with a thermal conductivity tester "HC-110) (manufactured by EKO Instruments).

### [Example 1 (Process (α))]

A binder liquid, which was prepared by diluting 6.9 g of water glass having a molecular ratio of 3 as the inorganic binder with 30 g of deionized water, was spray-coated on 40 g of fumed silica (A) (product name: "AEROSIL 200", primary average particle size: 12 nm, specific surface area: 200 m²/g, manufactured by NIPPON AEROSIL CO., LTD.), and the binder liquid and the fumed silica were blended by a blender to obtain fumed silica with a binder (A').

75 g of the obtained fumed silica with a binder (A') was placed into a mold having a length of 125 mm and a width of 125 mm, a pressure of 0.8×10⁵ Pa was applied to the fumed silica to mold the fumed silica in a plate-like shape having a thickness of 13 mm, and then the molded fumed silica was heated at 120°C for 48 hours to form a molded product. The density of the molded product was 0.3 g/cm³ according to calculation based on the size and the mass of the molded product.

The molded product was accommodated in an outer sheath made of a nylon-polyethylene bag "NHP-3425" commercially available, the inside of the outer sheath was decompressed to 1×10² Pa, and the outer sheath was sealed for decompression and encapsulation to obtain a vacuum insulation panel.

### [Example 2 (Process (α))]

A binder liquid, which was prepared by diluting 15.5 g of water glass having a molecular ratio of 3 as the inorganic binder with 75 g of deionized water, was spray-coated on 150 g of fumed silica (A) (product name: "AEROSIL 300", primary average particle size: 7 nm, specific surface area: 300 m²/g, manufactured by NIPPON AEROSIL CO., LTD.), and the binder liquid and the fumed silica were blended by the blender to obtain fumed silica with a binder (A').

26 g of the obtained fumed silica with a binder (A') was placed into the mold having a length of 125 mm and a width of 125 mm, a pressure of 4.3×10⁵ Pa was applied to the fumed silica to mold the fumed silica in a plate-like shape having a thickness of 5 mm, and then the molded fumed silica was heated at 120°C for 48 hours to form a molded product. The density of the molded product was 0.2 g/cm³ according to calculation based on the size and the mass of the molded product.

Like in Example 1, the molded product was accommodated in the outer sheath, the inside of the outer sheath was decompressed to 1 ×10² Pa, and the outer sheath was sealed for decompression and encapsulation to obtain a vacuum insulation panel.

### [Example 3 (Process (β))]

75 g of fumed silica with a binder (A') obtained in the same way as in Example 1 was accommodated in an inner sheath made of nonwoven fabric of polyethylene-terephthalate and was subjected to shape arrangement, and a pressure of 0.8×10⁵ Pa was applied to the fumed silica with a binder by a press, and then the pressurized fumed silica was heated at 120°C for 48 hours to form a molded product in a plate-like shape having a length of 110 mm, a width of 110 mm and a thickness of 17 mm. The density of the molded product was 0.3 g/cm³ according to calculation based on the size and the mass of the molded product.

A vacuum insulation panel was obtained in the same way as in Example 1 except that the molded product was accommodated in the inner sheath. In other words, the molded product accommodated in the inner sheath was further accommodated in the outer sheath, the inside of the outer sheath was decompressed to 1×10² Pa, and the outer sheath was sealed for decompression and encapsulation to obtain a vacuum insulation panel.

### [Example 4 (Process (β))]

A molded product was formed, being accommodated in an inner sheath, in the same way as in Example 3 except that a pressure of 0.6×10⁵ Pa was applied during molding. The density of the molded product thus obtained was 0.25 g/cm³ according to calculation based on the size and the mass of the molded product.

A vacuum insulation panel was obtained in the same way as in Example 1 except that the molded product was accommodated in the inner sheath.

### [Example 5 (Process (β))]

A binder liquid, which was prepared by diluting 6.9 g of water glass having a molecular ratio of 3 as the organic binder with 30 g of deionized water, was spray-coated on 30 g of the fumed silica (A) employed in Example 1 to obtain fumed silica with a binder (A'). Then, the blender was employed to blend the fumed silica with a binder with 30 g of porous silica (B) (product name "SUNSPHERE H-53", average particle size: 5 µm, porosity: 80%, specific surface area: 700 m²/g, manufactured by AGC Si-Tech Co., Ltd.) to obtain core members made of a mixture of silica powder (mass ratio A/B of the fumed silica (A) to the porous silica (B) in the core members made of such a powder mixture was 50/50).

The powder mixture was employed to obtain a molded product in a plate-like shape accommodated in an inner sheath as in Example 3.

A vacuum insulation panel was obtained in the same as in Example 1 except that the molded product was accommodated in the inner sheath.

### [Example 6 (Process (β))]

A fumed silica (A'), which was prepared by diluting 6.9 g of water glass having a molecular ratio of 3 as the inorganic binder with 30 g of deionized water to prepare a binder liquid and spray-coating the blinder liquid on 30 g of the fumed silica (A) employed in Example 1, and 13 g of the porous silica (B) employed in Example 5 were blended to prepare a powder mixture (where the mass ratio A/B of the fumed silica (A) to the porous silica (B) in the core members made of such a powder mixture was 70/30), and the powder mixture was employed to obtain a molded product in a plate-like shape accommodated in an inner sheath as in Example 2.

A vacuum insulation panel was obtained in the same way as in Example 1 except that the molded product was accommodated in the inner sheath.

### [Example 7 (Process (β))]

Fumed silica (A'), which was prepared by diluting 6.9 g of water glass having a molecular ratio of 3 as the inorganic binder with 30 g of deionized water to prepare a binder liquid and spray-coating the blinder liquid on 20 g of the fumed silica (A) employed in Example 1, and 30 g of the porous silica (B) employed in Example 5 were blended to prepare a powder mixture (where the mass ratio A/B of the fumed silica (A) to the porous silica (B) in the core members made of such a powder mixture was 40/60), and the powder mixture was employed to obtain a molded product in a plate-like shape accommodated in an inner sheath as in Example 3.

A vacuum insulation panel was obtained in the same way as in Example 1 except that the molded product was accommodated in the inner sheath.

### [Example 8 (Process (β))]

40 g of the porous silica (B) employed in Example 5 was employed to fabricate a molded product in the same way as in Example 3 except that no fumed silica with a binder (A') was employed, and that an inner sheath made of a commercially available paper material (xerographic paper) was employed instead of an inner sheath made of nonwoven fabric. The reason why the inner sheath made of a paper material was employed is that when porous silica (B) was accommodated in an inner sheath made of the same nonwoven fabric as in Example 3 without employing fumed silica with a binder (A'), powder particles passed through the nonwoven fabric and scattered during decompression and encapsulation.

The molded product accommodated in the inner sheath was accommodated in an outer sheath made of a commercially available gas barrier film (standard aluminum bag "ALH-8" for vacuum packaging), the inside of the outer sheath was decompressed to 1×10² Pa, and the outer sheath was sealed for decompression and encapsulation to obtain a vacuum insulation panel.

The measurement results of the thermal conductivities of the vacuum insulation panels obtained in the respective examples are shown in Table 1.

**[Table 1]**

| | Thermal conductivity [mW/mK] |
|---|---|
| Example 1 | 8.9 |
| Example 2 | 7.5 |
| Example 3 | 9.2 |
| Example 4 | 6.7 |
| Example 5 | 6.3 |
| Example 6 | 7 |
| Example 7 | 6.4 |
| Example 8 | 14.7 |

As shown in Table 1, the vacuum insulation panel in each of Examples 1 to 7 where the fumed silica with a binder (A') was employed had a low thermal conductivity and an excellent insulating property. Examples 1 with no inner sheath being employed therein and Example 2 with the inner sheath being employed therein had a nearly equivalent insulating property. The vacuum insulation panel of Example 4 where the pressure during molding was low and the fumed silica with a binder (A') in the molded product had a low density had a further lower thermal conductivity and an excellent insulating property in comparison with the vacuum insulation panel of Example 3. The vacuum insulation panel of each of Example 5 to Example 7 where the fumed silica with a binder (A') and the porous silica (B) were employed together had a further excellent insulating property in comparison with the vacuum insulation panel of Example 3.

On the other hand, Example 8 with only the porous silica (B) being employed therein failed to obtain a sufficient insulating property.

### INDUSTRIAL APPLICABILITY

In accordance with the process for manufacturing a vacuum insulation panel according to the present invention, it is possible to manufacture a vacuum insulation panel, which has a high degree of freedom in shape, is capable of stably obtaining an excellent insulating property and has a long lifetime. Such a vacuum insulation panel is useful as an insulation panel for houses, buildings, automobiles and so on.

The entire disclosure of Japanese Patent Application No. 2012-184412 filed on August 23, 2012 including specification, claims, drawings and summary is incorporated herein by reference in its entirety.

### REFERENCE SYMBOLS

1 and 2: Vacuum insulation panel, 10: core members, 12: molded product, 14: outer sheath, 16: inner sheath

## Claims

1. A process for manufacturing a vacuum insulation panel, comprising the following steps (I) and (II):
(I) a step of pressurizing core members under a pressure of at most 1 × 10⁶ Pa to form a molded product, the core members containing fumed silica with a binder (A'), which comprises fumed silica (A) and a binder applied to surfaces thereof; and
(II) a step of decompressing and encapsulating the molded product in an outer sheath having an airtight property.

2. The process according to Claim 1, wherein in step (I), the molded product is formed by pressurizing the core members with the core members being accommodated in an inner sheath having an air permeability; and in step (II), the molded product is decompressed and encapsulated in the outer sheath, being accommodated in the inner sheath.

3. The process according to Claim 1 or 2, wherein the core members contain porous silica (B).

4. The process according to Claim 3, wherein the mass ratio A/B of the fumed silica (A) to the porous silica (B) is 20/80 to 90/10.

5. The process according to any one of Claims 1 to 4, wherein the core members contain at least one additive (C) selected from the group consisting of graphite, carbon black, a titanium oxide and potassium titanate.

6. The process according to any one of Claims 1 to 5, wherein the binder is an inorganic binder.

7. A vacuum insulation panel comprising:
an outer sheath having an airtight property;
a molded product having core members, the core members containing fumed silica with a binder (A'), which comprises fumed silica (A) and a binder applied to surfaces thereof; and
the molded product being decompressed and encapsulated in the outer sheath.

8. The vacuum insulation panel according to Claim 7, further comprising an inner sheath having an air permeability, and the molded product being decompressed and encapsulated in the outer sheath with the molded product being accommodated in the inner sheath.
